# EUROPEAN PATENT APPLICATION

(11) **EP 4 618 195 A1**
(43) Date of publication of application: **17.09.2025**
(21) Application number: 23927090.3
(22) Date of filing: 17.10.2023
(51) Int. Cl.: H01M 4/58, H01M 10/054, C01B 25/45

(54) **POSITIVE ELECTRODE ACTIVE COMPOSITE MATERIAL, PREPARATION METHOD THEREFOR, POSITIVE ELECTRODE SHEET, SECONDARY BATTERY AND ELECTRICAL APPARATUS**

(30) Priority: 10.03.2023 CN 202310232621
(71) Applicant: Contemporary Amperex Technology (Hong Kong) Limited, Hong Kong (HK)
(72) Inventor: YANG, Huiling, Ningde, Fujian 352100 (CN); ZHAO, Yuzhen, Ningde, Fujian 352100 (CN); XU, Yue, Ningde, Fujian 352100 (CN); TAN, Xianming, Ningde, Fujian 352100 (CN); WEN, Yan, Ningde, Fujian 352100 (CN); HUANG, Qisen, Ningde, Fujian 352100 (CN)
(74) Representative: Gong, Jinping
(86) International application number: PCT/CN2023/124932
(87) International publication number: WO 2024/187746

(57) **Abstract**

A positive electrode active composite material, a preparation method therefor, a positive electrode plate, a secondary battery, and a power consuming apparatus are disclosed. The positive electrode active composite material includes a carbon material, a transition metal M and a polyanionic compound. The positive electrode active composite material has a good degree of graphitization and good processability, and the compaction density of the positive electrode active composite material and the compaction density of a positive electrode film layer are increased, improving the performance of batteries.

## Description

### TECHNICAL FIELD

This application relates to the technical field of secondary batteries, and in particular, to a positive electrode active composite material, a preparation method therefor, a positive electrode plate, a secondary battery, and a power consuming apparatus.

### BACKGROUND

In recent years, with the wide use of secondary batteries in energy storage power systems such as hydroelectric, thermal, wind, and solar power stations, and in many other fields such as electric tools, electric bicycles, electric motorcycles, electric vehicles, military equipment, and aerospace, an increasingly higher requirement is raised for the performance of secondary batteries in the market.

The performance of the positive electrode active material plays a key role in the performance of the battery. At present, the performance of the positive electrode active material cannot meet the requirements during use of the new generation of electrochemical systems.

### SUMMARY

In view of the foregoing problems, this application is accomplished. An object of this application is to provide a positive electrode active composite material. The positive electrode active composite material has excellent electrical conductivity and processability, and can improve the performance of a battery and reduce the manufacturing costs.

A first aspect of this application provides a positive electrode active composite material. The positive electrode active composite material includes a carbon material, a transition metal M, and a polyanionic compound.

The transition metal M has a catalytic effect in the graphitization of the carbon material at a low temperature, and can increase the degree of graphitization of the carbon material during the complexing of the carbon material with the polyanionic compound, thereby improving the electrical conductivity of the positive electrode active composite material, and improving the power performance of the battery by reducing the amount of a conductive agent used. Moreover, the distribution of the carbon material with a high degree of graphitization on the surface of the polyanionic compound enables the flexibility of the polyanionic compound to be increased by relatively slidable movement, thereby improving the flexibility of an electrode plate and reducing the cracks on an inner periphery of a bare battery core. Furthermore, when a transition metal is used as a catalyst, the degree of graphitization of the carbon material is improved during the preparation of the positive electrode active composite material; and compared with the direct complexing of the polyanionic compound with the carbon material with a high degree of graphitization, the complexing of the carbon material and the polyanionic compound is more uniform, which results in lower manufacturing costs of the positive electrode active composite material and a higher compaction density of the electrode plate. In addition, the transition metal M is also a highly electrically conductive material, and its distribution in the composite material can further improve the electrical conductivity of the positive electrode active composite material.

In any embodiment, the transition metal M includes at least one of Pt, Pd, Fe, Co, Ni, Mn, Cu, Au, Ag, Ru, and Rh.

The above-mentioned metals are all catalytic materials, and have high catalytic activity, which can realize low-temperature graphitization of the carbon material, and improve the degree of graphitization of the carbon material during low-temperature calcination, thereby improving the electrical conductivity of the positive electrode active composite material.

In any embodiment, based on a total weight of the carbon material, a percentage by weight of the transition metal M is 0.1% to 10% and optionally 1% to 10%.

By controlling the content of the transition metal M within an appropriate range, sufficient transition metal M can be provided to improve the degree of graphitization of the carbon material and improve the performance of the battery. Also, the production costs are saved, and the performance of the battery will not be affected by the addition of excessive transition metal elements, whereby both the performance and the production costs of the battery are desirable.

In any embodiment, based on the total weight of the positive electrode active composite material, a content in percentage by weight of the carbon material in the positive electrode active composite material is 0.1% to 10% and optionally 1% to 10%.

By controlling the content of the carbon material within an appropriate range, the electrical conductivity of the positive electrode active composite material can be effectively improved, and the agglomeration of particles of the positive electrode active composite material can be reduced to improve the compaction density of the positive electrode active composite material. Moreover, the problem of decrease in the gravimetric capacity of the positive electrode plate caused by an excessively high content of the carbon material can be reduced.

In any embodiment, the carbon material is coated on a surface of the polyanionic compound in a form of a carbon film, and the transition metal M is distributed in the carbon film.

By coating the carbon material on the surface of the polyanionic compound in the form of the carbon film, the contact area between the carbon material and the polyanionic compound is increased, the electron transport is facilitated, and the electrical conductivity of the polyanionic compound is improved. Moreover, when the transition metal M is distributed in the carbon film, the degree of graphitization of the carbon material can be effectively improved through uniform dispersion, and the electrical conductivity of the positive electrode active composite material can be further improved through the cooperation between the metal and the carbon material, thereby improving the battery performance.

In any embodiment, the carbon material is coated on surfaces of primary particles of the polyanionic compound in the form of the carbon film, and the transition metal M is distributed in the carbon film.

By coating the carbon material on the surfaces of the primary particles of the polyanionic compound in the form of the carbon film, the uniformity of distribution of the carbon material in the composite material is further improved and the electrical conductivity of the positive electrode active composite material is optimized.

In any embodiment, a chemical bond exists between the transition metal M and the carbon material.

The transition metal M and the carbon material undergo a chemical reaction during the preparation process to further exert an alloying effect. The agglomeration of the transition metal M is effectively reduced through the connection by the chemical bond, and the electrical conductivity of the positive electrode active composite material is further improved.

In any embodiment, the polyanionic compound includes a sodium ion-containing phosphate framework compound or a sodium ion-containing sulfate framework compound.

In any embodiment, the polyanionic compound includes a phosphate-based sodium salt material and a sulfate-based sodium salt material. The phosphate-based sodium salt material includes a compound represented by any one of Formulas I to IV, and the phosphate-based sodium salt material includes a compound represented by Formula V: Naₓ₁R_{y1}(PO₄)_{z1} Formula I
where 1 ≤ x1 ≤ 3, 1 ≤ y1 ≤ 2, 1 ≤ z1 ≤ 3, and R includes at least one of Mg, Al, Sc, Ti, V, Cr, Mn, Fe, Co, Ni, Cu, Zn, Zr, Nb, Mo, Sn, Hf, Ta, W, and Pb;
Naₓ₂R_{y2}(P₂O₇)_{z2} Formula II

   where 1 ≤ x2 ≤ 7, 1 ≤ y2 ≤ 3, 1 ≤ z2 ≤ 4, and R includes at least one of Mg, Al, Sc, Ti, V, Cr, Mn, Fe, Co, Ni, Cu, Zn, Zr, Nb, Mo, Sn, Hf, Ta, W, and Pb;
Naₓ₃R_{y3}(PO₄)_{z3}(P₂O₇)ₖ₃ Formula III

   where 1 ≤ x3 ≤ 7, 1 ≤ y3 ≤ 4, 1 ≤ z3 ≤ 2, and 1 ≤ k3 ≤ 4, and R includes at least one of Mg, Al, Sc, Ti, V, Cr, Mn, Fe, Co, Ni, Cu, Zn, Zr, Nb, Mo, Sn, Hf, Ta, W, and Pb;
Naₓ₄R_{y4}(PO₄)_{z4}Mₗ₁ Formula IV

   where 1 ≤ x4 ≤ 3, 1 ≤ y4 ≤ 2, 1 ≤ z4 ≤ 2, 1 ≤ l1 ≤ 3, R includes at least one of Mg, Al, Sc, Ti, V, Cr, Mn, Fe, Co, Ni, Cu, Zn, Zr, Nb, Mo, Sn, Hf, Ta, W, and Pb, and M includes at least one of F, Cl, and Br; and
Naₓ₅X_{y5}(SO₄)₃ Formula V

   where 0 < x5 ≤ 2, 0 < y5 ≤ 2, and X includes at least one of Mn, Fe, Co, Ni, Cu, and Zn.

In any embodiment, an I_{D}I_{G} value of the carbon material in the positive electrode active composite material is less than 0.8. The I_{D}I_{G} value is a ratio of a peak intensity I_{D} in a range of 1300 cm⁻¹ to 1400 cm⁻¹ to a peak intensity I_{G} in a range of 1580 cm⁻¹ to 1620 cm⁻¹ determined by Raman spectroscopy.

An I_{D}I_{G} value of the carbon material in the positive electrode active composite material, that is, less than 0.8, indicates that the carbon material has a high degree of graphitization, which is conducive to the improvement of the electrical conductivity of the positive electrode active composite material.

In any embodiment, a median particle size Dv50 of the positive electrode active composite material satisfies 0.5 µm ≤ Dv50 ≤ 10 µm and optionally 1.0 µm ≤ Dv50 ≤ 5.0 µm.

By controlling the median particle size Dv50 of the positive electrode active composite material within an appropriate range, physical gel in a slurry coating process caused by an excessively small particle size of the positive electrode active composite material can be effectively reduced; and an excessively low compaction density of powder caused by an excessively large median particle size Dv50 of the positive electrode active composite material and the reduction of the dynamic performance of the battery during charging and discharging can also be effectively relieved. Therefore, the processability and electrochemical performance of the positive electrode active composite material are both desirable.

In any embodiment, the powder resistance of the positive electrode active composite material at 25°C under a pressure of 200 MPa is 50 Ω · cm to 3500 Ω · cm.

The positive electrode active composite material provided in this application has a low powder resistance, so that the positive electrode plate has a high electron transport capability, and the battery has excellent cycle life and safety during long-term use of fast charging.

A second aspect of this application provides a method for preparing a positive electrode active composite material. The preparation method includes the following steps:
preparing a polyanionic compound precursor; and
mixing the precursor, a carbon source, and an M source uniformly, and performing high-temperature calcination to prepare the positive electrode active composite material, where the M source includes a transition metal salt.

The positive electrode active composite material includes: a carbon material, a transition metal M, and a polyanionic compound.

The preparation method effectively improves the degree of graphitization of the carbon material while achieving uniform coating of the carbon material on the polyanionic compound. By using the method, the problem that the carbon material is prone to agglomeration and uneven distribution caused by the direct complexing of a highly graphitized carbon material with the positive electrode active material is solved, and the problem that high degree of graphitization cannot be achieved at a sintering temperature for coating organic carbon on the polyanionic compound is also solved. In addition, the carbon material with a high degree of graphitization uniformly distributed in the positive electrode active composite material is conducive to the slidable movement between particles of the positive electrode active composite material, and plays a role in toughening the electrode plate.

In any embodiment, the polyanionic compound includes a compound represented by any one of Formulas I-III:
Naₓ₁R_{y1}(PO₄)_{z1} Formula I

   where 1 ≤ x1 ≤ 3, 1 ≤ y1 ≤ 2, 1 ≤ z1 ≤ 3, and R includes at least one of Mg, Al, Sc, Ti, V, Cr, Mn, Fe, Co, Ni, Cu, Zn, Zr, Nb, Mo, Sn, Hf, Ta, W, and Pb;
Naₓ₂R_{y2}(P₂O₇)_{z2} Formula II

   where 1 ≤ x2 ≤ 7, 1 ≤ y2 ≤ 3, 1 ≤ z2 ≤ 4, and R includes at least one of Mg, Al, Sc, Ti, V, Cr, Mn, Fe, Co, Ni, Cu, Zn, Zr, Nb, Mo, Sn, Hf, Ta, W, and Pb; and
Naₓ₃R_{y3}(PO₄)_{z3}(P₂O₇)ₖ₃ Formula III

   where 1 ≤ x3 ≤ 7, 1 ≤ y3 ≤ 4, 1 ≤ z3 ≤ 2, and 1 ≤ k3 ≤ 4, and R includes at least one of Mg, Al, Sc, Ti, V, Cr, Mn, Fe, Co, Ni, Cu, Zn, Zr, Nb, Mo, Sn, Hf, Ta, W, and Pb.

The polyanionic compound precursor is prepared through a process including the following steps:
mixing raw materials including a phosphorus source, a sodium source, and an R source with a solvent to obtain a primary mixed slurry, and drying the primary mixed slurry followed by low-temperature calcination to obtain the polyanionic compound precursor.

The phosphate-based sodium pyrophosphate has a low decomposition temperature and a low high-temperature calcination temperature, and effective carbonization of the carbon material in the coating layer is difficult to achieve under the existing process conditions. This method can significantly improve the electrical conductivity and improve the battery performance.

In any embodiment, the primary mixed slurry further includes the carbon source.

The primary mixed slurry further includes a carbon source, which can facilitate the carbon material to be evenly distributed between the primary particles of the polyanionic compound, thereby effectively improving the electrical conductivity of the material.

In any embodiment, the low-temperature calcination is carried out at a calcination temperature of 300°C to 350°C for a calcination time of 1 h to 6 h.

By controlling the calcination temperature and calcination time of the low-temperature calcination within appropriate ranges, the particle size and crystallinity of the precursor can be controlled within appropriate ranges, which is suitable for the preparation of the positive electrode active composite material.

In any embodiment, the high-temperature calcination is carried out at a calcination temperature of 450°C to 700°C for a calcination time of 5 h to 15 h.

By controlling the calcination temperature and calcination time of the high-temperature calcination, the particle size of the positive electrode active composite material can be controlled within an appropriate range, and the degree of graphitization of the carbon material is improved, whereby the performance and production costs of the positive electrode active composite material are both desirable.

In any embodiment, the carbon source includes one or more of sucrose, glucose, citric acid, starch, cyclodextrin, asphalt, polypropylene, polyethylene, polyethylene glycol, or polystyrene.

All the above organic carbon sources can form a carbon film coated on the surface of the polyanionic compound, thereby increasing the contact area between the carbon material and the polyanionic compound, facilitating the electron transport, and further improving the electrical conductivity of the polyanionic compound.

In any embodiment, the R source includes one or more of a magnesium source, an aluminum source, a scandium source, a titanium source, a vanadium source, a chromium source, a manganese source, an iron source, a cobalt source, a nickel source, a copper source, a zinc source, a zirconium source, a niobium source, a molybdenum source, a tin source, a hafnium source, a tantalum source, a tungsten source, and a lead source.

In any embodiment, the M source includes one or more of a platinum source, a palladium source, an iron source, a cobalt source, a nickel source, and a manganese source.

All of the above-mentioned M sources can effectively catalyze the graphitization of the carbon source and improve the degree of graphitization of the carbon material. In addition, under the conditions for high-temperature calcination, the M source may be distributed in the carbon material in the form of a metal atom, and a chemical bond is formed between the transition metal atom and the carbon material, thereby further improving the stability between the transition metal M and the carbon material and the electrical conductivity of the positive electrode active composite material.

A third aspect of this application provides a positive electrode plate. The positive electrode plate includes a positive electrode film layer, and the positive electrode film layer includes a binder, a conductive agent, and the positive electrode active composite material according to the first aspect or a positive electrode active composite material prepared by the preparation method according to the second aspect.

In any embodiment, based on a total weight of the positive electrode film layer, a content in percentage by weight of the binder is 1.5% to 3% and optionally 2.0% to 2.5%.

The content in percentage by weight of the binder is controlled within an appropriate range, so as to provide a sufficient bonding force and improve the capacity, coulombic efficiency and cycling performance of the battery. By further controlling the content in percentage by weight of the binder within the range of 2.0% to 2.5%, the cycling performance of the battery can be further improved.

In any embodiment, the conductive agent includes at least one of a one-dimensional conductive material and a zero-dimensional conductive material.

The addition of the one-dimensional conductive material and/or the zero-dimensional conductive material can increase the electrical conductivity of the positive electrode plate.

In any embodiment, the one-dimensional conductive material includes one or more of a single-walled carbon nanotube and a multi-walled carbon nanotube; and/or
the content in percentage by weight of the one-dimensional conductive material is 0.2% to 1% and optionally 0.5% to 1%, based on the total weight of the positive electrode film layer.

By controlling the content in percentage by weight of the one-dimensional conductive material within an appropriate range, the capacity, coulombic efficiency, and cycling performance of the battery can be improved. By further controlling the content in percentage by weight of the one-dimensional conductive material within a range of 0.5% to 0.9%, the coulombic efficiency of the battery can be further improved.

In any embodiment, the zero-dimensional conductive material includes one or more of Super P, Ketjen black, and acetylene black, and/or
based on the total weight of the positive electrode film layer, the content in percentage by weight of the zero-dimensional conductive material is 1% to 3% and optionally 2% to 2.8%.

By controlling the content in percentage by weight of the zero-dimensional conductive material within an appropriate range, the capacity, coulombic efficiency, and cycling performance of the battery can be improved. By further controlling the content in percentage by weight of the zero-dimensional conductive material within the range of 2% to 2.8%, the coulombic efficiency of the battery can be further improved.

A fourth aspect of this application provides a secondary battery. The secondary battery includes a positive electrode plate according to the third aspect.

In any embodiment, the secondary battery is a negative electrode sodium-free secondary battery.

Compared with other sodium secondary batteries, a negative electrode side of the negative electrode sodium-free secondary battery does not need to be pre-coated or deposited with highly active sodium metal, thereby optimizing the manufacturing feasibility and safety of the battery core while improving the energy density of the battery. In any embodiment, the secondary battery further includes a negative electrode plate. The negative electrode plate includes a negative electrode current collector and a base coating layer disposed on at least one surface of the negative electrode current collector. The base coating layer includes one or more of carbon nanotubes, graphite, graphene, silver/carbon composite nanoparticles, and tin/carbon composite nanoparticles.

The base coating layer not only has excellent electrical conductivity, but also facilitates the uniform deposition of metal ions on the surface of the current collector, improving the coulombic efficiency and cycling performance of the battery.

In any embodiment, an areal density of the base coating layer is 5 g/m² to 50 g/m².

The base coating layer having an areal density of 5 g/m² to 50 g/m² facilitates the uniform distribution of nucleation sites in the negative electrode-free secondary battery, promotes the uniform deposition of the metal, and does not affect the electron transport behavior.

In any embodiment, a thickness of the base coating layer is 2 µm to 100 µm.

By controlling the thickness of the base coating layer within the range of 2 µm to 100 µm, enough nucleation sites can be provided for the negative electrode-free secondary battery, to facilitate the uniform deposition of metal ions and suppress the growth of dendrites.

A fifth aspect of this application provides a power consuming apparatus. The power consuming apparatus includes a secondary battery according to the fourth aspect of this application.

### BRIEF DESCRIPTION OF THE DRAWINGS

FIG. 1 shows a schematic diagram of a secondary battery cell according to an embodiment of this application;
FIG. 2 shows an exploded view of the secondary battery cell according to an embodiment of this application as shown in FIG. 1;
FIG. 3 shows a schematic diagram of a battery module according to an embodiment of this application;
FIG. 4 shows a schematic diagram of a battery pack according to an embodiment of this application;
FIG. 5 shows an exploded view of the battery pack according to an embodiment of this application as shown in FIG. 4; and
FIG. 6 shows a schematic diagram of a power consuming apparatus powered by a secondary battery according to an embodiment of this application.

### Reference numerals:

1. battery pack; 2. upper box; 3. lower box; 4. battery module; 5. secondary battery cell; 51. housing; 52. electrode assembly; 53 cover plate.

### DETAILED DESCRIPTION

Hereinafter, embodiments that specifically disclose a positive electrode active composite material and a preparation method therefor, a positive electrode plate, a secondary battery, and a power consuming apparatus of this application will be described in detail with reference to the drawings as appropriate. However, there are cases where unnecessary detailed descriptions are omitted. For example, there are cases where detailed descriptions of well-known items and repeated descriptions of actually identical structures are omitted, to avoid unnecessary redundancy in the following descriptions and to facilitate the understanding by those skilled in the art. In addition, the drawings and subsequent descriptions are provided for those skilled in the art to fully understand this application, and are not intended to limit the subject matter recited in the claims.

The "ranges" disclosed in this application are defined in the form of lower and upper limits, with a given range being defined by the selection of a lower limit and an upper limit defining the boundaries of the particular range. A range defined in this manner may be inclusive or exclusive of the end values, and may be arbitrarily combined, that is, any lower limit may be combined with any upper limit to form a range. For example, if ranges of 60-120 and 80-110 are listed for a particular parameter, it is to be understood that ranges of 60-110 and 80-120 are also expected. Additionally, if the minimum range values 1 and 2 and the maximum range values 3, 4 and 5 are listed, the following ranges are all contemplated: 1-3, 1-4, 1-5, 2- 3, 2-4 and 2-5. In this application, unless stated otherwise, the numerical range "a-b" represents an abbreviated representation of any combination of real numbers between a to b, where both a and b are real numbers. For example, the numerical range "0-5" means that all real numbers between 0-5 are listed herein, and "0-5" is merely an abbreviated representation of the combination of these numbers. In addition, when a parameter is expressed as an integer ≥ 2, it is equivalent to disclosing that the parameter is, for example, an integer of 2, 3, 4, 5, 6, 7, 8, 9, 10, 11, and 12, etc.

Unless otherwise specified, all the embodiments and optional embodiments of this application can be combined with each other form new technical solutions.

Unless otherwise specified, all technical features and optional technical features of this application can be combined with each other to form new technical solutions.

Unless otherwise specified, all the steps in this application can be performed in the order described or in a random order, and preferably in the order described. For example, the method includes steps (a) and (b), meaning that the method may comprise steps (a) and (b) performed sequentially, or may comprise steps (b) and (a) performed sequentially. For example, the reference to the method may further include step (c), meaning that step (c) may be added to the method in any order. For example, the method may include steps (a), (b) and (c), include steps (a), (c) and (b), or steps (c), (a) and (b), and the like.

Unless otherwise specifically stated, "comprising" and "including" mentioned in this application indicate open inclusion or closed inclusion. For example, the "including" and "comprising" may indicate that it is possible to include or comprise other components not listed, and it is also possible to include or comprise the listed components exclusively.

Unless otherwise specified, the term "or" is inclusive in this application. For example, the phrase "A or B" means "A, B, or both A and B". More specifically, the condition "A or B" is satisfied by any one of the following conditions: A is true (or present) and B is false (or absent); A is false (or absent) and B is true (or present); or both A and B are true (or present).

The polyanionic compound has high chemical stability, thermal stability, and electrochemical stability, and therefore, the battery using it as a positive electrode active material has excellent cycle life and safety. However, the polyanionic compounds have the technical problem of poor electrical conductivity, and their direct use will affect the gravimetric capacity, thus seriously restricting their large-scale application. To solve the above technical problems, carbon is usually coated on the surface of the polyanionic compound to improve its electrical conductivity. However, due to the low decomposition temperature of the polyanionic compound, the high temperature required for carbonizing the carbon coating cannot be reached, so the electrical conductivity is difficult to be further improved, which hinders the further exertion of the electrochemical performance of the polyanionic compound. If the carbon material with a high degree of graphitization is directly coated on the polyanionic compound, the carbon material with high crystallinity can hardly be effectively dispersed and uniformly coated on the polyanionic compound. Therefore, there is a need to provide a positive electrode active material with both high degree of graphitization and processability to meet the requirements raised for the new generation of batteries.

### [Positive electrode active composite material]

In view of this, this application provides a positive electrode active composite material. The positive electrode active composite material includes a carbon material, a transition metal M, and a polyanionic compound.

The transition metal M has a catalytic effect in the graphitization of the carbon material at a low temperature, and can increase the degree of graphitization of the carbon material during the complexing of the carbon material with the polyanionic compound, thereby improving the electrical conductivity of the positive electrode active composite material, and improving the power performance of the battery by reducing the amount of a conductive agent used. Moreover, the distribution of the carbon material with a high degree of graphitization on the surface of the polyanionic compound enables the flexibility of the polyanionic compound to be increased by relatively slidable movement, thereby improving the flexibility of an electrode plate and reducing the cracks on an inner periphery of a bare battery core. Furthermore, when a transition metal is used as a catalyst, the degree of graphitization of the carbon material is improved during the preparation of the positive electrode active composite material; and compared with the direct complexing of the polyanionic compound with the carbon material with a high degree of graphitization, the complexing of the carbon material and the polyanionic compound is more uniform, which results in lower manufacturing costs of the positive electrode active composite material and a higher compaction density of the electrode plate. In addition, the transition metal M is also a highly electrically conductive material, and its distribution in the composite material can further improve the electrical conductivity of the positive electrode active composite material.

In some embodiments, the transition metal M includes at least one of Pt, Pd, Fe, Co, Ni, Mn, Cu, Au, Ag, Ru, and Rh.

In some embodiments, M includes Pt. In some embodiments, M includes Pd. In some embodiments, M includes Fe. In some embodiments, M includes Co. In some embodiments, M includes Ni. In some embodiments, M includes Mn.

The above-mentioned metals are all catalytic materials, and have high catalytic activity, which can realize low-temperature graphitization of the carbon material, and improve the degree of graphitization of the carbon material during low-temperature calcination, thereby improving the electrical conductivity of the positive electrode active composite material.

In some embodiment, based on the total weight of the carbon material, the percentage by weight of the transition metal M is 0.1% to 10% and optionally 1% to 10%.

In some embodiments, based on the total weight of the carbon material, the content in percentage by weight of the transition metal M is optionally 0.1%, 0.5%, 1%, 1.5%, 2%, 2.5%, 3%, 3.5%, 4%, 4.5%, 5%, 5.5%, 6%, 6.5%, 7%, 7.5%, 8%, 8.5%, 9%, 9.5%, 10% or a value in a range formed by any two of the above points.

By controlling the molar content of the transition metal M within an appropriate range, sufficient transition metal M can be provided to improve the degree of graphitization of the carbon material and improve the performance of the battery. Also, the production costs are saved, and the performance of the battery will not be affected by the addition of excessive transition metal elements, whereby both the performance and the production costs of the battery are desirable.

In some embodiments, based on the total weight of the positive electrode active composite material, a content in percentage by weight of the carbon material in the positive electrode active composite material is 0.1% to 10% and optionally 1% to 10%.

In some embodiments, based on the total weight of the positive electrode active composite material, the content in percentage by weight of the carbon material in the positive electrode active composite material is optionally 0.1%, 0.15%, 0.5%, 1%, 1.5%, 2%, 2.5%, 3%, 3.5%, 4%, 4.5%, 5%, 5.5%, 6%, 6.5%, 7%, 7.5%, 8%, 8.5%, 9%, 9.5%, 10% or a value in the range formed by any two of the above points.

By controlling the content of the carbon material within an appropriate range, the electrical conductivity of the positive electrode active composite material can be effectively improved, and the agglomeration of particles of the positive electrode active composite material can be reduced to improve the compaction density of the positive electrode active composite material. Moreover, the problem of decrease in the gravimetric capacity of the positive electrode plate caused by an excessively high content of the carbon material can be reduced.

In some embodiments, the carbon material is coated on a surface of the polyanionic compound in a form of a carbon film, and the transition metal M is distributed in the carbon film.

By coating the carbon material on the surface of the polyanionic compound in the form of the carbon film, the contact area between the carbon material and the polyanionic compound is increased, the electron transport is facilitated, and the electrical conductivity of the polyanionic compound is improved. Moreover, when the transition metal M is distributed in the carbon film, the degree of graphitization of the carbon material can be effectively improved through uniform dispersion, and the electrical conductivity of the positive electrode active composite material can be further improved through the cooperation between the metal and the carbon material, thereby improving the battery performance.

In some embodiments, the carbon material is coated on the surface of the primary particles of the polyanionic compound in the form of the carbon film, and the transition metal M is distributed in the carbon film.

By coating the carbon material on the surface of the primary particles of the polyanionic compound in the form of the carbon film, the uniformity of distribution of the carbon material in the composite material is further improved and the electrical conductivity of the positive electrode active composite material is optimized.

In some embodiments, a chemical bond exists between the transition metal M and the carbon material.

The transition metal M and the carbon material undergo a chemical reaction during the preparation process to produce a chemical connection, by which the agglomeration of the transition metal M is effectively reduced, and the alloying effect is further exerted to improve the electrical conductivity of the positive electrode active composite material.

The chemical bond between the transition metal M and carbon can be characterized by transmission electron microscopy and synchrotron radiation fine absorption spectroscopy.

In some embodiments, the polyanionic compound includes a sodium ion-containing phosphate framework compound or a sodium ion-containing sulfate framework compound.

In some embodiments, the polyanionic compound includes a phosphate-based sodium salt material and a sulfate-based sodium salt material. The phosphate-based sodium salt material includes a compound represented by any one of Formulas I to IV; and the phosphate-based sodium salt material includes a compound represented by Formula V:
Naₓ₁R_{y1}(PO₄)_{z1} Formula I

   where 1 ≤ x1 ≤ 3, 1 ≤ y1 ≤ 2, 1 ≤ z1 ≤ 3, and R includes at least one of Mg, Al, Sc, Ti, V, Cr, Mn, Fe, Co, Ni, Cu, Zn, Zr, Nb, Mo, Sn, Hf, Ta, W, and Pb;
Naₓ₂R_{y2}(P₂O₇)_{z2} Formula II

   where 1 ≤ x2 ≤ 7, 1 ≤ y2 ≤ 3, 1 ≤ z2 ≤ 4, and R includes at least one of Mg, Al, Sc, Ti, V, Cr, Mn, Fe, Co, Ni, Cu, Zn, Zr, Nb, Mo, Sn, Hf, Ta, W, and Pb;
Naₓ₃R_{y3}(PO₄)_{z3}(P₂O₇)ₖ₃ Formula III

   where 1 ≤ x3 ≤ 7, 1 ≤ y3 ≤ 4, 1 ≤ z3 ≤ 2, and 1 ≤ k3 ≤ 4, and R includes at least one of Mg, Al, Sc, Ti, V, Cr, Mn, Fe, Co, Ni, Cu, Zn, Zr, Nb, Mo, Sn, Hf, Ta, W, and Pb;
Naₓ₄R_{y4}(PO₄)_{z4}Mₗ₁ Formula IV

   where 1 ≤ x4 ≤ 3, 1 ≤ y4 ≤ 2, 1 ≤ z4 ≤ 2, 1 ≤ l1 ≤ 3, R includes at least one of Mg, Al, Sc, Ti, V, Cr, Mn, Fe, Co, Ni, Cu, Zn, Zr, Nb, Mo, Sn, Hf, Ta, W, and Pb, and M includes at least one of F, Cl, and Br; and
Naₓ₅X_{y5}(SO₄)₃ Formula V

   where 0 < x5 ≤ 2, 0 < y5 ≤ 2, and X includes at least one of Mn, Fe, Co, Ni, Cu, and Zn.

In some embodiments, R includes Fe. In some embodiments, R includes Al. In some embodiments, R includes V In some embodiments, R includes Mn. In some embodiments, x1 is optionally 1, 1.5, 2, 2.5, 3, 3.5, 4, 4.5, 5, 5.5, 6, 6.5, 7, or a value in a range formed by any two of the above points, y1 is optionally 0.1, 0.2, 0.4, 0.5, 0.6, 0.8, 1, 1.2, 1.4, 1.5, 1.6, 1.8, 2, or a value in a range formed by any two of the above points, and z1 is optionally 0.1, 0.2, 0.4, 0.5, 0.6, 0.8, 1, 1.2, 1.4, 1.5, 1.6, 1.8, 2, 2.2, 2.4, 2.5, 2.6, 2.8, 3, or a value in a range formed by any two of the above points.

In some embodiments, R includes Fe. In some embodiments, R includes Mg. In some embodiments, R includes Al. In some embodiments, R includes Ni. In some embodiments, R includes Mn. In some embodiments, x2 is optionally 1, 1.5, 2, 2.5, 3, 3.5, 4, 4.5, 5, 5.5, 6, 6.5, 7, or a value in a range formed by any two of the above points; y2 is optionally 0.1, 0.2, 0.4, 0.5, 0.6, 0.8, 1, 1.2, 1.4, 1.5, 1.6, 1.8, 2, 2.2, 2.4, 2.5, 2.6, 2.8, 3, or a value in a range formed by any two of the above points; and z2 is optionally 1, 1.5, 2, 2.5, 3, 3.5, 4, or a value in a range formed by any two of the above points.

In some embodiments, R includes Fe. In some embodiments, R includes Co. In some embodiments, R includes V In some embodiments, R includes Ni. In some embodiments, R includes Mn. In some embodiments, x3 is optionally 1, 1.5, 2, 2.5, 3, 3.5, 4, 4.5, 5, 5.5, 6, 6.5, 7, or a value in a range formed by any two of the above points; y3 is optionally 1, 1.5, 2, 2.5, 3, 3.5, 4, or a value in a range formed by any two of the above points; z3 is optionally 0.1, 0.2, 0.4, 0.5, 0.6, 0.8, 1, 1.2, 1.4, 1.5, 1.6, 1.8, 2, or a value in a range formed by any two of the above points; and k3 is optionally 1, 1.5, 2, 2.5, 3, 3.5, 4, or a value in a range formed by any two of the above points.

In some embodiments, R includes Fe. In some embodiments, R includes Co. In some embodiments, R includes V In some embodiments, R includes Ni. In some embodiments, R includes Mn. In some embodiments, x4 is optionally 0.1, 0.2, 0.4, 0.5, 0.6, 0.8, 1, 1.2, 1.4, 1.5, 1.6, 1.8, 2, 2.2, 2.4, 2.5, 2.6, 2.8, 3, or a value in a range formed by any two of the above points; y4 is optionally 0.1, 0.2, 0.4, 0.5, 0.6, 0.8, 1, 1.2, 1.4, 1.5, 1.6, 1.8, 2, or a value in a range formed by any two of the above points; z4 is optionally 0.1, 0.2, 0.4, 0.5, 0.6, 0.8, 1, 1.2, 1.4, 1.5, 1.6, 1.8, 2, or a value in a range formed by any two of the above points; and l1 is optionally 0.1, 0.2, 0.4, 0.5, 0.6, 0.8, 1, 1.2, 1.4, 1.5, 1.6, 1.8, 2, 2.2, 2.4, 2.5, 2.6, 2.8, 3, or a value in a range formed by any two of the above points.

In some embodiments, X includes Fe. In some embodiments, X includes Mn. In some embodiments, X includes Ni. In some embodiments, X includes Zn. In some embodiments, x5 is optionally 0.1, 0.2, 0.4, 0.5, 0.6, 0.8, 1, 1.2, 1.4, 1.5, 1.6, 1.8, 2, or a value in a range formed by any two of the above points, and y5 is optionally 0.1, 0.2, 0.4, 0.5, 0.6, 0.8, 1, 1.2, 1.4, 1.5, 1.6, 1.8, 2, or a value in a range formed by any two of the above points.

In some embodiments, an I_{D}I_{G} value of the carbon material in the positive electrode active composite material is less than 0.8. The I_{D}I_{G} value is a ratio of a peak intensity I_{D} in a range of 1300 cm⁻¹ to 1400 cm⁻¹ to a peak intensity I_{G} in a range of 1580 cm⁻¹ to 1620 cm⁻¹ determined by Raman spectroscopy.

In some embodiments, the I_{D}I_{G} value of the carbon material in the positive electrode active composite material is optionally 0.1, 0.2, 0.3, 0.4, 0.5, 0.6, 0.7, 0.75, or a value in a range formed by any two of the above points.

The I_{D}I_{G} value of the carbon material can be measured by any well-known means, including, but not limited to, Raman spectroscopy and X-ray diffractometery. For example, the degree of graphitization of the carbon material is characterized by Raman spectroscopy. The Raman spectrum of carbon includes main "resonance" bands in ranges of 1300 cm⁻¹ to 1400 cm⁻¹ (about 1340 cm⁻¹) and 1580 cm⁻¹ to 1620 cm⁻¹, which are designated as bands "D" and "G" respectively. It is generally considered that the band D is attributed to disordered carbon defects and the band G is attributed to graphite or "ordered" sp² carbon. Therefore, the degree of graphitization of the carbon material is often characterized by the intensity ratio of the peak intensity I_{D} in the range of 1300 cm⁻¹ to 1400 cm⁻¹ to the peak intensity I_{G} in the range of 1580 cm⁻¹ to 1620 cm⁻¹ in the Raman spectrum. As the I_{D}I_{G} value decreases, the degree of graphitization of the carbon material increases, and the crystallinity increases.

An I_{D}/I_{G} value of the carbon material in the positive electrode active composite material, that is, less than 0.8, indicates that the carbon material has a high degree of graphitization, which is conducive to the improvement of the electrical conductivity of the positive electrode active composite material.

In some embodiments, a median particle size Dv50 of the positive electrode active composite material satisfies 0.5 µm ≤ Dv50 ≤ 10 µm and optionally 1.0 µm ≤ Dv50 ≤ 5.0 µm.

Dv50 of the positive electrode active composite material can be measured by any well-known means, including, but not limited to, particle size analysis-laser diffraction method. For example, according to GB/T 19077-2016 Particle size analysis-laser diffraction method, 0.1 g to 0.13 g of positive electrode active composite material sample to be tested is weighed in a 50 mL beaker, 5 g of absolute ethanol is added, and then a stirring rod of about 2.5 mm is added and sealed with a plastic wrap. The sample is sonicated for 5 min, transferred to a magnetic stirrer, and stirred at 500 rpm for 20 min or more. 2 samples are tested for each batch of products. The Mastersizer 2000E laser particle size analyzer from Malvern Instruments Inc. is used for the test.

In some embodiments, the median particle size Dv50 of the positive electrode active composite material is optionally 0.5 µm, 1.0 µm, 1.5 µm, 2.0 µm, 2.5 µm, 3.0 µm, 3.5 µm, 4.0 µm, 4.5 µm, 5.0 µm, 5.5 µm, 6.0 µm, 6.5 µm, 7.0 µm, 7.5 µm, 8.0 µm, 8.5 µm, 9.0 µm, 9.5 µm, 10 µm, or a value in a range formed by any two of the above points.

By controlling the median particle size Dv50 of the positive electrode active composite material within an appropriate range, the physical gel in the slurry coating process caused by an excessively small particle size of the positive electrode active composite material can be effectively reduced; and an excessively low compaction density of the powder caused by an excessively large median particle size Dv50 of the positive electrode active composite material and the reduction of the dynamic performance of the battery during charging and discharging can also be effectively relieved. Therefore, the processability and electrochemical performance of the positive electrode active composite material are both desirable.

In some embodiment, the powder resistance of the positive electrode active composite material at 25°C under a pressure of 200 MPa is 50 Ω · cm to 3500 Ω · cm.

In some embodiments, the powder resistance of the positive electrode active composite material at 25°C under a pressure of 200 MPa is optionally 50 Ω · cm, 100 Ω · cm, 200 Ω · cm, 300 Ω · cm, 400 Ω · cm, 500 Ω · cm, 600 Ω · cm, 700 Ω · cm, 800 Ω · cm, 900 Ω · cm, 1000 Ω · cm, 1500 Ω · cm, 2000 Ω · cm, 2500 Ω · cm, 3000 Ω · cm, or a value in a range formed by any two of the above points.

The powder resistance of the positive electrode active composite material can be measured by any well-known means, including, but not limited to, a powder resistivity test method. For example, the powder resistivity test instrument is PRCD1100 from Initial Energy Science & Technology Co., Ltd, the pressure range is 10 MPa to 400 MPa, and the indenter size is 78.54 mm². Test: A certain amount of the positive electrode active composite material as a powder is taken and placed in a special compaction mold. Then the mold is placed on the powder resistivity test instrument, the pressure is set to 200 MPa, and the powder resistivity under the pressure of 200 MPa is read on the equipment.

The positive electrode active composite material provided in this application has a low powder resistance, so that the positive electrode plate has a high electron transport capability, and the battery has excellent cycle life and safety during long-term use of fast charging.

This application further provides a method for preparing a positive electrode active composite material, which includes the following steps:
preparing a polyanionic compound precursor; and
mixing the precursor, a carbon source, and an M source uniformly, and performing high-temperature calcination to prepare the positive electrode active composite material, where the M source includes a transition metal salt.

The positive electrode active composite material comprises a carbon material, a transition metal M and a polyanionic compound.

The preparation method effectively improves the degree of graphitization of the carbon material while achieving uniform coating of the carbon material on the polyanionic compound. By using the method, the problem that the carbon material is prone to agglomeration and uneven distribution caused by the direct complexing of a highly graphitized carbon material with the positive electrode active material is solved, and the problem that high degree of graphitization cannot be achieved at a sintering temperature for coating organic carbon on the polyanionic compound is also solved. In addition, the carbon material with a high degree of graphitization uniformly distributed in the positive electrode active composite material is conducive to the slidable movement between particles of the positive electrode active composite material, and plays a role in toughening the electrode plate.

In some embodiments, the polyanionic compound includes a compound represented by any one of Formulas I to III;
Naₓ₁R_{y1}(PO₄)_{z1} Formula I

   where 1 ≤ x1 ≤ 3, 1 ≤ y1 ≤ 2, 1 ≤ z1 ≤ 3, and R includes at least one of Mg, Al, Sc, Ti, V, Cr, Mn, Fe, Co, Ni, Cu, Zn, Zr, Nb, Mo, Sn, Hf, Ta, W, and Pb;
Naₓ₂R_{y2}(P₂O₇)_{z2} Formula II

   where 1 ≤ x2 ≤ 7, 1 ≤ y2 ≤ 3, 1 ≤ z2 ≤ 4, and R includes at least one of Mg, Al, Sc, Ti, V, Cr, Mn, Fe, Co, Ni, Cu, Zn, Zr, Nb, Mo, Sn, Hf, Ta, W, and Pb; and
Naₓ₃R_{y3}(PO₄)_{z3}(P₂O₇)ₖ₃ Formula III

   where 1 ≤ x3 ≤ 7, 1 ≤ y3 ≤ 4, 1 ≤ z3 ≤ 2, and 1 ≤ k3 ≤ 4, and R includes at least one of Mg, Al, Sc, Ti, V, Cr, Mn, Fe, Co, Ni, Cu, Zn, Zr, Nb, Mo, Sn, Hf, Ta, W, and Pb.

The polyanionic compound precursor is prepared through a process including the following steps:
mixing raw materials including a phosphorus source, a sodium source, and an R source with a solvent to obtain a primary mixed slurry, and drying the primary mixed slurry followed by low-temperature calcination to obtain the polyanionic compound precursor.

The phosphate-based sodium pyrophosphate has a low decomposition temperature and a low high-temperature calcination temperature, and effective carbonization of the carbon material in the coating layer is difficult to achieve under the existing process conditions. This method can significantly improve the electrical conductivity and improve the battery performance.

In some embodiments, the primary mixed slurry further includes the carbon source.

The primary mixed slurry further includes a carbon source, which can facilitate the carbon material to be evenly distributed between the primary particles of the polyanionic compound, thereby effectively improving the electrical conductivity of the material.

In some embodiments, the low-temperature calcination is carried out at a calcination temperature of 300°C to 350°C for a calcination time of 1 h to 6 h.

In some embodiments, the calcination temperature of the low-temperature calcination is optionally 300°C, 315°C, 320°C, 325°C, 330°C, 335°C, 340°C, 345°C, 350°C, or a value in a range formed by any two of the above points, and the calcination time is optionally 1 h, 1.5 h, 2 h, 2.5 h, 3 h, 3.5 h, 4 h, 4.5 h, 5 h, 5.5 h, 6 h, or a value in a range formed by any two of the above points.

By controlling the calcination temperature and calcination time of the low-temperature calcination within appropriate ranges, the particle size and crystallinity of the precursor can be controlled within appropriate ranges, which is suitable for the preparation of the positive electrode active composite material.

In some embodiments, the high-temperature calcination is carried out at a calcination temperature of 450°C to 700°C for a calcination time of 5 h to 15 h.

In some embodiments, the calcination temperature of the high-temperature calcination is optionally 450°C, 500°C, 550°C, 600°C, 650°C, 700°C, or a value in a range formed by any two of the above points, and the calcination time is optionally 5 h, 5.5 h, 6 h, 6.5 h, 7 h, 7.5 h, 8 h, 8.5 h, 9 h, 9.5 h, 10 h, 10.5 h, 11 h, 11.5 h, 12 h, 12.5 h, 13 h, 13.5 h, 14 h, 14.5 h, 15 h, or a value in a range formed by any two of the above points.

By controlling the calcination temperature and calcination time of the high-temperature calcination, the particle size of the positive electrode active composite material can be controlled within an appropriate range, and the degree of graphitization of the carbon material is improved, whereby the performance and production costs of the positive electrode active composite material are both desirable.

The technical solution provided in this application realizes the graphitization of the carbon material at a low temperature, and solves the technical problem that it is difficult to uniformly complexing the carbon material with a high degree of graphitization and the polyanionic compound at low costs. In some embodiments, the carbon source includes one or more of sucrose, glucose, citric acid, starch, cyclodextrin, asphalt, polypropylene, polyethylene, polyethylene glycol, or polystyrene.

In some embodiments, the carbon source includes sucrose. In some embodiments, the carbon source includes glucose. In some embodiments, the carbon source includes polypropylene. In some embodiments, the carbon source includes polyethylene glycol. In some embodiments, the carbon source includes sucrose and polystyrene.

All the above organic carbon sources can form a carbon film coated on the surface of the polyanionic compound, thereby increasing the contact area between the carbon material and the polyanionic compound, facilitating the electron transport, and further improving the electrical conductivity of the polyanionic compound.

In some embodiments, the R source includes one or more of a magnesium source, an aluminum source, a scandium source, a titanium source, a vanadium source, a chromium source, a manganese source, an iron source, a cobalt source, a nickel source, a copper source, a zinc source, a zirconium source, a niobium source, a molybdenum source, a tin source, a hafnium source, a tantalum source, a tungsten source, and a lead source.

In some embodiments, the M source includes one or more of a platinum source, a palladium source, an iron source, a cobalt source, a nickel source, and a manganese source.

In some embodiments, the M source includes a platinum source. In some embodiments, the M source includes an iron source. In some embodiments, the M source includes a cobalt source. In some embodiments, the M source includes a platinum source and a cobalt source.

All of the above-mentioned M sources can effectively catalyze the graphitization of the carbon source and improve the degree of graphitization of the carbon material. In addition, under the conditions for high-temperature calcination, the M source can be decomposed in situ to form metal atoms distributed in the carbon material, and a chemical bond is formed between the metal atom and the carbon material, thereby further improving the stability between the transition metal M and the carbon material and the electrical conductivity of the positive electrode active composite material.

### [Positive electrode plate]

This application further provides a positive electrode plate, which includes a positive electrode film layer. The positive electrode film layer includes a binder, a conductive agent, and the positive electrode active composite material provided in some embodiments, or a positive electrode active composite material prepared by the preparation method of the positive electrode active composite material provided in some embodiments.

In some embodiments, based on the total weight of the positive electrode film layer, a content in percentage by weight of the binder is 1.5% to 3% and optionally 2.0% to 2.5%.

In some embodiments, based on the total weight of the positive electrode film layer, the content in percentage by weight of the binder is optionally 1.5%, 1.6%, 1.7%, 1.8%, 1.9%, 2.0%, 2.1%, 2.2%, 2.3%, 2.4%, 2.5%, 2.6%, 2.7%, 2.8%, 2.9%, 3%, or a value in a range formed by any two of the above points.

The content in percentage by weight of the binder is controlled within an appropriate range to provide sufficient bonding force without causing an excessively large resistance of the electrode plate, which is beneficial to reducing the resistance of the electrode plate and improving the capacity, coulombic efficiency and cycling performance of the battery. By further controlling the content in percentage by weight of the binder within a range of 2.0% to 2.5%, the cycling performance of the battery can be further improved.

In some embodiments, the conductive agent includes at least one of a one-dimensional conductive material and a zero-dimensional conductive material.

In some embodiments, the conductive agent includes both a one-dimensional conductive material and a zero-dimensional conductive material. The addition of two forms of conductive materials is conducive to further increasing the electrical conductivity of the positive electrode plate.

In some embodiments, the one-dimensional conductive material includes one or more of a single-walled carbon nanotube and a multi-walled carbon nanotube; and/or
based on the total weight of the positive electrode film layer, the content in percentage by weight of the one-dimensional conductive material is 0.2% to 1% and optionally 0.5% to 1%.

In some embodiments, the one-dimensional conductive material includes a single-walled carbon nanotube. In some embodiments, the one-dimensional conductive material includes a multi-walled carbon nanotube. In some embodiments, the one-dimensional conductive material includes a single-walled carbon nanotube and a multi-walled carbon nanotube. In some embodiments, the one-dimensional conductive material includes a single-wall carbon nanotube or a multi-walled carbon nanotube.

In some embodiments, based on the total weight of the positive electrode film layer, the content in percentage by weight of the one-dimensional conductive material is optionally 0.2%, 0.3%, 0.4%, 0.5%, 0.6%, 0.7%, 0.8%, 0.9%, 1%, or a value in a range formed by any two of the above points.

By controlling the content in percentage by weight of the one-dimensional conductive material within an appropriate range, the resistance of the electrode plate is reduced, and the capacity, coulombic efficiency, and cycling performance of the battery are improved. By further controlling the content in percentage by weight of the one-dimensional conductive material within a range of 0.5% to 1%, the coulombic efficiency of the battery can be further improved.

In some embodiments, the zero-dimensional conductive material includes one or more of Super P, Ketjen black, and acetylene black, and/or
based on the total weight of the positive electrode film layer, the content in percentage by weight of the zero-dimensional conductive material is 1% to 3% and optionally 2% to 2.8%.

In some embodiments, the zero-dimensional conductive material includes Super P. In some embodiments, the zero-dimensional conductive material includes Ketjen black. In some embodiments, the zero-dimensional conductive material includes Super P and Ketjen black.

In some embodiments, based on the total weight of the positive electrode film layer, the content in percentage by weight of the zero-dimensional conductive material is optionally 1%, 1.2%, 1.5%, 1.7%, 2%, 2.2%, 2.5%, 2.7%, 3%, or a value in a range formed by any two of the above points.

By controlling the content in percentage by weight of the zero-dimensional conductive material within an appropriate range, the resistance of the electrode plate is reduced, and the capacity, coulombic efficiency, and cycling performance of the battery are improved. By further controlling the content in percentage by weight of the zero-dimensional conductive material within the range of 2% to 2.8%, the coulombic efficiency of the battery can be further improved.

In some embodiments, the positive electrode plate further includes a positive electrode current collector. The positive electrode current collector may be a conductive carbon sheet, a metal foil, a carbon-coated metal foil, a porous metal sheet, or a composite current collector. The conductive carbon material of the conductive carbon sheet is optionally one or more of Super P, carbon black, Ketjen black, carbon dots, carbon nanotubes, graphite, graphene, and carbon nanofibers. The metal material of the metal foil, the carbon-coated metal foil, and the porous metal sheet are each independently selected from at least one of copper, aluminum, nickel, and stainless steel. The composite current collector may be a composite current collector formed by complexing a metal foil with a polymer base film.

In some embodiments, the positive electrode plate can be prepared in the following manners: dispersing the components for preparing the positive electrode plate, for example, the positive electrode active composite material, the conductive agent, the binder and any other components in a solvent (for example, N-methyl pyrrolidone) to form a positive electrode slurry; and applying the positive electrode slurry on a positive electrode current collector, followed by oven drying, cold pressing and other procedures, to obtain the positive electrode plate.

### [Negative electrode plate]

The negative electrode plate may include only the negative electrode current collector and no negative electrode active material. The negative electrode plate may also have a metal phase pre-deposited on the negative electrode current collector.

In some embodiments, the negative electrode current collector may be a metal foil or a composite current collector. For example, an aluminum foil or copper foil can be used as the metal foil. The composite current collector may include a polymer material substrate and a metal layer formed on at least one surface of the polymer material substrate. The composite current collector can be formed by forming a metal material (copper, copper alloy, nickel, nickel alloy, titanium, titanium alloy, silver and silver alloy, etc.) on a high molecular material substrate (such as polypropylene (PP), polyethylene terephthalate (PET), polybutylene terephthalate (PBT), polystyrene (PS), and polyethylene (PE)).

In some embodiments, the negative electrode plate includes a negative electrode current collector and a base coating layer disposed on at least one surface of the negative electrode current collector. The base coating layer includes one or more of carbon nanotubes, graphite, graphene, carbon black, alumina, silver/carbon composite nanoparticles, and tin/carbon composite nanoparticles.

The base coating layer not only has excellent electrical conductivity, but also facilitates the uniform deposition of metal ions on the surface of the current collector, improving the cycling performance and safety of the battery.

### In some embodiments, an areal density of the base coating layer is 5 g/m² to 50 g/m².

In some embodiments, the areal density of the base coating layer is optionally 5 g/m², 10 g/m², 15 g/m², 20 g/m², 25 g/m², 30 g/m², 35 g/m², 40 g/m², 45 g/m², 50 g/m² or a value in a range formed by any two of the above points.

A base coating layer having an areal density of 5 g/m² to 50 g/m² facilitates the uniform distribution of nucleation sites, promotes the uniform deposition of the metal, and does not affect the electron transport behavior.

### In some embodiments, the base coating layer has a thickness of 2 µm to 100 µm.

In some embodiments, the thickness of the base coating layer is optionally 2 µm, 5 µm, 10 µm, 15 µm, 20 µm, 25 µm, 30 µm, 35 µm, 40 µm, 45 µm, 50 µm, 55 µm, 60 µm, 65 µm, 70 µm, 75 µm, 80 µm, 85 µm, 90 µm, 95 µm, 100 µm, or a value in a range formed by any two of the above points.

By controlling the thickness of the base coating layer within the range of 2 µm to 100 µm, enough nucleation sites can be provided, to facilitate the uniform deposition of metal ions and suppress the growth of dendrites.

### [Separator]

In some embodiments, the secondary battery further includes a separator. The type of the separator is not particularly limited in this application, and any well-known separator with a porous structure having good chemical stability and mechanical stability may be selected.

In some embodiments, the material of the separator may be selected from at least one of polyethylene, polypropylene, polyvinylidene fluoride, aramid fiber, polyethylene terephthalate, polytetrafluoroethylene, polyacrylonitrile, polyimide, polyamide, polyester, and natural fiber. The separator may be a single-layer film or a multi-layer composite film, which is not particularly limited. When the separator is a multi-layer composite film, the material of each layer may be the same or different, which is not particularly limited.

In some embodiments, the positive electrode plate, the negative electrode plate, and the separator can be made into an electrode assembly by a winding process or a lamination process.

In some embodiments, the secondary battery may include an outer package. The outer package can be used to encapsulate the above-mentioned electrode assembly and electrolyte.

In some embodiments, the outer package of the secondary battery may be a hard case, such as a hard plastic case, an aluminium case, a steel case, and the like. The outer package of the secondary battery can also be a soft pack, such as a bag-type soft pack. The material of the soft pack can be a plastic, and examples of the plastic include polypropylene, polybutylene terephthalate, and polybutylene succinate.

### [Secondary battery]

The secondary battery may include various forms, including, but not limited to, for example, a battery cell, a battery module, and a battery pack.

The battery cell includes a positive electrode plate, and the positive electrode plate includes the positive electrode active composite material provided in some embodiments or a positive electrode active composite material prepared by the preparation method provided in some embodiments.

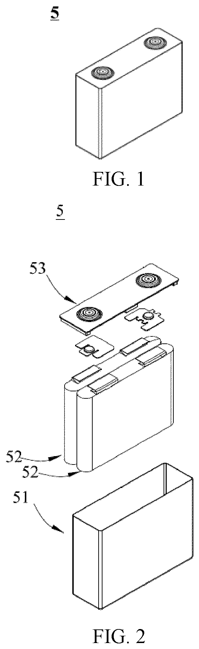

This application has no particular limitation on the shape of the battery cell, which can be cylindrical, square or any other shape. For example, FIG. 1 shows a battery cell 5 of a square structure as an example, and FIG. 2 is an exploded view of the battery cell 5.

In some embodiments, the secondary battery cell further includes a negative electrode plate, a separator, and an electrolyte solution.

### In some embodiments, the secondary battery cell is a negative electrode sodium-free secondary battery.

The negative electrode sodium-free secondary battery refers to a battery formed by not actively disposing a negative electrode active material layer on the negative electrode side during the manufacturing process of the battery. For example, during the manufacturing process of the battery, no sodium metal or carbonaceous active material layer is disposed at the negative electrode by a procedure such as coating or deposition to form a negative electrode active material layer. During the first charging process, sodium ions get electrons at the anode side to deposit metallic sodium on the surface of the current collector to form a sodium metal phase. During the discharging process, metallic sodium can be converted into sodium ions transported back to the positive electrode to achieve cyclic charging and discharging. Compared with other sodium secondary batteries, the negative electrode sodium-free secondary battery has no negative electrode active material layer, and can obtain a higher energy density.

In some embodiments, to improve the battery performance, the negative electrode side of the negative electrode sodium-free secondary battery may be provided with some conventional materials that can be used as the negative electrode active material, such as a carbonaceous material, a metal oxide, an alloy, and the like. Although these materials have a certain capacity, due to the small amount of these materials, the materials are not used as the main negative electrode active material in the battery, and so that no negative electrode active material layer is formed. A sodium secondary battery thus formed is still be regarded as a negative electrode sodium-free secondary battery.

In some embodiments, a CB value of the negative electrode sodium-free secondary battery is less than or equal to 0.1.

The CB value is obtained by dividing the capacity per unit area of the negative electrode plate in the secondary battery by the capacity per unit area of the positive electrode plate. Since no negative electrode active material is contained or only a small amount of negative electrode active material is contained in the negative electrode-free battery, the negative electrode plate has a small capacity per unit area, and the CB value of the secondary battery is less than or equal to 0.1.

In some embodiments, referring to FIG. 2, an outer package may include a housing 51 and a cover plate 53. Here, the housing 51 can include a bottom plate and a side plate connected to the bottom plate, where the bottom plate and the side plate define an accommodating cavity. The housing 51 has an opening that communicates with the accommodating cavity, and the cover plate 53 can cover the opening to close the accommodating cavity. The positive electrode plate, the negative electrode plate, and the separator may be wound or stacked to form an electrode assembly 52. The electrode assembly 52 is enclosed in the accommodating cavity. The number of electrode assemblies 52 included in the secondary battery 5 may be one or more, which can be selected by those skilled in the art according to specific actual requirements.

### [Battery module]

In some embodiments, the battery cell can be assembled into a battery module, the number of battery cells contained in the battery module can be one or more, and the specific number can be selected by those skilled in the art according to the application and capacity of the battery module.

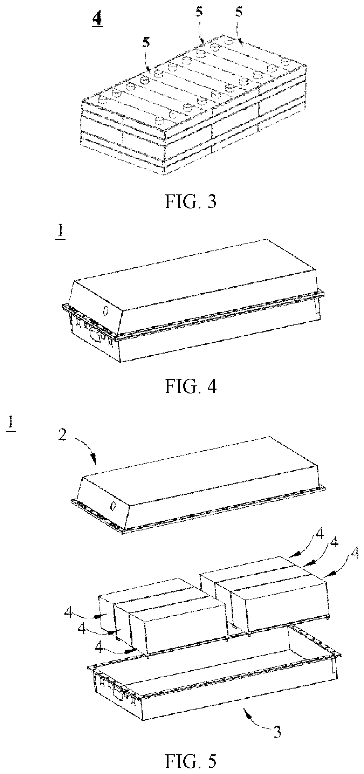

FIG. 3 shows an example of a battery module 4. Referring to FIG. 3, in the battery module 4, multiple battery cells 5 may be sequentially arranged in the length direction of the battery module 4. Certainly, the multiple battery cells 5 can be arranged in any other way. The multiple battery cells 5 may further be fixed by fasteners.

Optionally, the battery module 4 may further include a shell having an accommodating space, in which the multiple battery cells 5 are accommodated.

### [Battery pack]

In some embodiments, the battery module may further be assembled into a battery pack, the number of battery modules contained in the battery pack may be one or more, and the specific number can be selected by those skilled in the art according to the use and capacity of the battery pack.

FIG. 4 and FIG. 5 show an example of a battery pack 1. Referring to FIG. 4 and FIG. 5, the battery pack 1 may include a battery box and multiple battery modules 4 provided in the battery box. The battery box includes an upper box 2 and a lower box 3, where the upper box 2 can cover the lower box 3, and defines an enclosed space for accommodating the battery module 4. The multiple battery modules 4 may be arranged in the battery box in any manner.

### [Power consuming apparatus]

In an embodiment of this application, a power consuming apparatus is provided, which includes at least one of the secondary battery according to any embodiment, the battery module according to any embodiment, or the battery pack according to any embodiment.

The power consuming apparatus includes at least one of the secondary battery, the battery module, or the battery pack provided in this application. The secondary battery, the battery module, or the battery pack can be used as a power source for the power consuming apparatus, and can also be used as an energy storage unit for the power consuming apparatus. The power consuming apparatus may include, but is not limited to, a mobile device (such as a mobile phone, and a laptop, etc.), an electric vehicle (such as an all-electric vehicle, a hybrid electric vehicle, a plug-in hybrid electric vehicle, an electric bicycle, an electric scooter, an electric golf cart, and an electric truck, etc.), an electric train, a ship, a satellite, and an energy storage system, etc.

For the power consuming apparatus, the secondary battery, the battery module, or the battery pack can be selected according to the requirements during use.

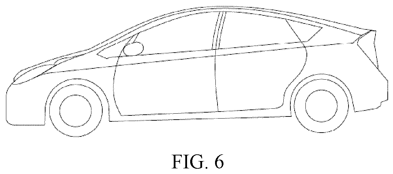

FIG. 6 shows an example of a power consuming apparatus. The power consuming apparatus is an all-electric vehicle, a hybrid electric vehicle, or a plug-in hybrid electric vehicle, etc. To meet the requirements of the power consuming apparatus for high power and high energy density of secondary batteries, a battery pack or a battery module may be used.

The apparatus used as another example may be, for example, a mobile phone, a tablet computer, and a laptop, etc. The apparatus is generally required to be light and thin, and can use a secondary battery as a power source.

### Examples

Examples of this application will be described hereinafter. The examples described below are exemplary and only used to explain this application, and should not be construed as a limitation on this application. Where specific techniques or conditions are not indicated in the examples, the techniques or conditions described in the literatures in the art or described in the product specifications are followed. The reagents or instruments for which no manufacturers are noted are all common products commercially available from the market.

### I. Preparation method

### Example 1

### 1) Preparation of the positive electrode active composite material

Sodium pyrophosphate, ferrous oxalate, and ammonium dihydrogen phosphate were dissolved in deionized water at a molar ratio of 1: 2.9: 2, and stirred continuously at room temperature for 30 min to obtain a mixed slurry. The mixed slurry was sanded to give an average particle size of 0.2 µm. The slurry was spray-dried, with an air intake temperature of 220°C and an air discharge temperature of 109°C, to obtain a powdery precursor. Then, under an N₂ atmosphere, the temperature was raised to 320°C at a heating rate of 2°C, and held for 4 h. The sintered product was crushed and sieved to obtain a positive electrode active composite material precursor Na₄Fe_{2.9}(PO₄)₂P₂O₇. Finally, the positive electrode active composite material precursor Na₄Fe_{2.9}(PO₄)₂P₂O₇, glucose, and ferric nitrate were mixed and ground for 30 min. Then, under an N₂ atmosphere, the temperature was raised to 520°C at a heating rate of 2°C, and held for 10 h. The sintered product was crushed and sieved to obtain a positive electrode active composite material containing Na₄Fe_{2.9}(PO₄)₂P₂O₇, C, and Fe.

### 2) Preparation of a positive electrode plate

2.5 wt% of a polyvinylidene fluoride binder was fully dissolved in N-methylpyrrolidone (NMP), and then 2.0 wt% of Super P, 1.0 wt% of carbon nanotubes, and 94.5 wt% of the positive electrode active composite material were added, stirred and mixed uniformly to obtain a positive electrode slurry. The slurry was uniformly coated on a surface of an aluminum foil that was a current collector, and then transferred to a vacuum drying oven and dried completely. The dried electrode plate was rolled and punched to obtain a positive electrode plate.

### 3) Preparation of negative electrode plate

Single-walled carbon nanotubes and carboxymethyl cellulose (CMC) were added to deionized water at a weight ratio of 1: 0.4 and stirred to form a uniform slurry. The slurry was coated on a surface of a copper foil that was a negative electrode current collector, and then transferred to a vacuum drying oven, and dried completely. The electrode plate was then punched to obtain a negative electrode plate without a negative electrode structure. The base coating layer had a thickness of 20 µm and an areal density of 25 g/m².

### 4) Electrolyte solution

In a glove box (H₂O < 0.1 ppm, and O₂< 0.1 ppm) under an argon atmosphere, the sodium salt sodium hexafluorophosphate NaPF₆ was dissolved in the organic solvent ethylene glycol dimethyl ether (DME), and stirred uniformly to obtain an electrolyte solution with a sodium salt concentration of 1.5 mol/L.

### 5) Separator

A polypropylene film was used as a separator.

### 6) Preparation of a battery

The positive electrode plate, the separator, and the negative electrode plate were stacked sequentially, so that the separator was located between the positive electrode plate and the negative electrode plate for separation. Then they were wound to obtain a bare battery core. The bare battery core was welded with tabs, filled into an aluminum package, and baked at 80°C to remove water. Then, the electrolyte solution was immediately injected, and the opening was sealed, to obtain an uncharged battery. The uncharged battery was then subjected to standing, hot and cold pressing, chemical formation, shaping, capacity test, and other procedures in sequence to obtain the negative electrode sodium-free secondary battery product of Example 1.

### Examples 2 to 24

The preparation method of the batteries of Examples 2 to 24 was similar to that of Example 1, except that the content of each component of M, carbon, and the polyanionic compound in the positive electrode active composite material and the type of the polyanionic compound were adjusted. Specific parameters were shown in Table 1.

### Comparative Example 1

The preparation method of the battery of Comparative Example 1 was similar to that of Example 1, except that the preparation method of the positive electrode active composite material was adjusted. The preparation method was specifically as follows.

Sodium pyrophosphate, ferrous oxalate and ammonium dihydrogen phosphate were dissolved in deionized water at a molar ratio of 1: 2.9: 2, and stirred continuously at room temperature for 30 min to obtain a mixed slurry. The mixed slurry was sanded to give an average particle size of 0.2 µm, and then an aqueous glucose solution was added, mixed and milled for 10 min to obtain a final slurry. The slurry was spray-dried, with an air intake temperature of 220°C and an air discharge temperature of 109°C, to obtain a powdery precursor. Finally, under the N₂ atmosphere, the temperature was raised to 320°C at a heating rate of 2°C and held for 4 h; and then further raised to 550°C at a heating rate of 2°C and held for 10 h. The sintered product was crushed and sieved to obtain a positive electrode active composite material precursor Na₄Fe_{2.9}(PO₄)₂P₂O₇/C.

### 2) Preparation of the positive electrode plate

2.5 wt% of a polyvinylidene fluoride binder was fully dissolved in N-methylpyrrolidone (NMP), and then 2.0 wt% of Super P, 1.0 wt% of carbon nanotubes, and 94.5 wt% of the positive electrode active composite material were added, stirred and mixed uniformly to obtain a positive electrode slurry. The slurry was uniformly coated on a surface of an aluminum foil that was a current collector, and then transferred to a vacuum drying oven and dried completely. The dried electrode plate was rolled and punched to obtain the positive electrode plate.

### 3) Preparation of the negative electrode plate

Carbon nanotubes and carboxymethyl cellulose (CMC) were added to deionized water at a weight ratio of 1: 0.4 and stirred to form a uniform slurry. The slurry was coated on a surface of a copper foil that was a negative electrode current collector, and then transferred to a vacuum drying oven, and dried completely. The electrode plate was then punched to obtain a negative electrode plate without a negative electrode structure. The base coating layer had a thickness of 20 µm and an areal density of 25 g/m².

### 4) Electrolyte solution

In a glove box (H₂O < 0.1 ppm, and O₂ < 0.1 ppm) under an argon atmosphere, the sodium salt sodium hexafluorophosphate NaPF₆ was dissolved in the organic solvent ethylene glycol dimethyl ether (DME), and stirred uniformly to obtain an electrolyte solution with a sodium salt concentration of 1.5 mol/L.

### 5) Separator

A polypropylene film was used as a separator.

### 6) Preparation of a battery

The positive electrode plate, the separator, and the negative electrode plate were stacked sequentially, so that the separator was located between the positive electrode plate and the negative electrode plate for separation. Then the positive electrode plate, the separator, and the negative electrode plate were wound to obtain a bare battery core. The bare battery core was welded with tabs, filled into an aluminum package, and baked at 80°C to remove water. Then, the electrolyte solution was immediately injected, and the opening was sealed, to obtain an uncharged battery. The uncharged battery was then subjected to standing, hot and cold pressing, chemical formation, shaping, capacity test, and other procedures in sequence to obtain a negative electrode sodium-free secondary battery product of Comparative Example 1.

### Comparative Examples 2 to 6

The preparation method of batteries in Comparative Examples 2 to 6 was similar to that of Comparative Example 1, except that the contents of raw materials used during the preparation of the positive electrode active composite material were adjusted. Specific parameters are shown in Table 1.

### II. Performance test

### 1. Test of the positive electrode active composite material

### 1) Test of a median particle size Dv50

According to GB/T 19077-2016 Particle size analysis-laser diffraction method, 0.1 g to 0.13 g of positive electrode active composite material sample to be tested was weighed in a 50 mL beaker, 5 g of absolute ethanol was added, and then a stirring rod of about 2.5 mm was added and sealed with a plastic wrap. The sample was sonicated for 5 min, transferred to a magnetic stirrer, and stirred at 500 rpm for 20 min or more. 2 samples were tested for each batch of products. The Mastersizer 2000E laser particle size analyzer from Malvern Instruments Inc. was used for the test.

### 2) I_{D}I_{G} test of the carbon material

The carbon material in the positive electrode active composite material was tested by Raman spectroscopy. The intensity ratio of the peak intensity I_{D} in the range of 1300 cm⁻¹ to 1400 cm⁻¹ to the peak intensity I_{G} in the range of 1580 cm⁻¹ to 1620 cm⁻¹ was I_{D}I_{G}. As the I_{D}I_{G} value decreases, the degree of graphitization of the carbon material increases.

### 3) Resistance test

The powder resistivity test instrument was PRCD1100 from Initial Energy Science & Technology Co., Ltd, the pressure range was 10 MPa to 400 MPa, and the indenter size was 78.54 mm².

Test: A certain amount of the positive electrode active composite material as a powder was taken and placed in a special compaction mold. Then the mold was placed on the instrument, the pressure was set to 200 MPa, and the powder resistivity under the pressure of 200 MPa was read on the equipment. 2. Performance test of positive electrode plate

### 1) Compaction density

According to an embodiment of this application, the compaction density PD of the positive electrode film layer was determined by measuring the weight of the single-sided positive electrode film layer per unit area (g/cm²) and the thickness (cm) of the single-sided positive electrode film (the number of collected points was > 14). Specifically, the compaction density PD of the positive electrode film layer = the weight of the single-sided positive electrode film layer per unit area (g/cm²)/thickness of the single-sided positive electrode film layer (cm).

### 2) Electrode plate resistance

Dried positive electrode film layers were cut from the left, middle, and right positions of the positive electrode plate, and cut into small discs with a diameter of 10 mm. The electrode plate resistance tester from Initial Energy Science & Technology Co., Ltd was powered on, the disc was placed at an appropriate position on the "probe" of the electrode plate resistance tester, and the "start" button was clicked. The reading was recorded after it was stable. Each small disc was tested at two positions, and finally the average of six measurements was calculated and used as the electrode plate resistance of the electrode plate.

### 3. Battery performance test

### 1) First-cycle discharge capacity test

The first-cycle discharge capacity was tested as follows. At 25°C, the prepared battery was charged to 3.75 V at a constant current of 1C, then charged at a constant voltage of 3.75 V until the current dropped to 0.05 C, and then discharged to 1.5 V at a constant current of 1C, to obtain the first-cycle discharge capacity (Cd1). The test procedures for the comparative example and other examples were the same as above.

### 2) First-cycle coulombic efficiency test

The first-cycle coulombic efficiency was tested as follows. At 25°C, the prepared battery was charged to 3.75 V at a constant current of 1/5 C, and then charged at a constant voltage of 3.75 V until the current dropped to 0.05 C, to obtain the first-cycle charge capacity (Cc1). Then the battery was discharged to 1.5 V at a constant current of 1/5 C, to obtain the first-cycle discharge capacity (Cd1). The coulombic efficiency was calculated according to a formula below: First-cycle coulombic efficiency of battery = first-cycle discharge capacity (Cd1)/first-cycle charge capacity (Cc1). The test procedures for the comparative example and other examples were the same as above.

### 3) Test of a cycling capacity retention rate of a battery

The cycling capacity retention rate of the battery was tested as follows. At 25°C, the prepared battery was charged to 3.75 V at a constant current of 1C, then charged at a constant voltage of 3.75 V until the current dropped to 0.05 C, and then discharged to 1.5 V at a constant current of 1C, to obtain a capacity that was designated as an initial capacity (C0). The above steps were repeated for the same battery, and a discharge capacity (Cn) of the battery after an n^{th} cycle was recorded. The capacity retention rate of the battery after each cycle was Pn = Cn/C0 x 100%. A curve of the capacity retention rate versus the number of cycles of the battery was obtained with the 100 values of P1, P2, ... 100 as the vertical ordinates and the corresponding number of cycles as the horizontal ordinates. During the test, the first cycle corresponds to n = 1, the second cycle corresponds to n = 2, ... and the 100^{th} cycle corresponds to n = 100. The corresponding data of the capacity retention rate of the batteries in the examples or comparative examples in Table 2 is the data measured after 100 cycles under the above test conditions, that is, the value of P100. The test procedures for the comparative example and other examples were the same as above.

### III. Analysis of test results of examples and comparative examples

In accordance with the above methods, the batteries of the examples and comparative examples were prepared, and tested for various performance parameters. The results are shown in Table 1 and Table 2 as below.

**Table 1**

| No. | Positive electrode active composite material | | | | | Positive electrode plate | |
|---|---|---|---|---|---|---|---|
| | Polyanionic compound | M | Content in percentage by weight of M /% | Content in percentage by weight of carbon material /% | Median particle size of a positive electrode active material Dv50/µn | Content in percentage by weight of a binder PVDF /% | Content in percentage by weight of a conductive agent Super P /% |
| Example 1 | Na₄Fe_{2.9}(PO₄)₂P₂O₇ | Fe | 5.0 | 3.0 | 3.0 | 2.50 | 2 |
| Example 2 | Na₄Fe_{2.9}(PO₄)₂P₂O₇ | Co | 5.0 | 3.0 | 3.0 | 2.50 | 2 |
| Example 3 | Na₄Fe_{2.9}(PO₄)₂P₂O₇ | Ni | 5.0 | 3.0 | 3.0 | 2.50 | 2 |
| Example 4 | Na₄Fe_{2.9}(PO₄)₂P₂O₇ | Mn | 5.0 | 3.0 | 3.0 | 2.50 | 2 |
| Example 5 | Na₄Fe_{2.9}(PO₄)₂P₂O₇ | Pt | 5.0 | 3.0 | 3.0 | 2.50 | 2 |
| Example 6 | Na₄Fe_{2.9}(PO₄)₂P₂O₇ | Fe | 5.0 | 3.0 | 1.5 | 2.00 | 2.5 |
| Example 7 | Na₄Fe_{2.9}(PO₄)₂P₂O₇ | Fe | 2.0 | 3.0 | 3.0 | 2.50 | 2 |
| Example 8 | Na₄Fe_{2.9}(PO₄)₂P₂O₇ | Fe | 0.1 | 3.0 | 3.0 | 2.50 | 2 |
| Example 9 | Na₄Fe_{2.9}(PO₄)₂P₂O₇ | Fe | 10.0 | 3.0 | 3.0 | 2.50 | 2 |
| Example 10 | Na₄Fe_{2.9}(PO₄)₂P₂O₇ | Fe | 5.0 | 0.1 | 3.0 | 2.50 | 2 |
| Example 11 | Na₄Fe_{2.9}(PO₄)₂P₂O₇ | Fe | 2.0 | 1.0 | 3.0 | 2.50 | 2 |
| Example 12 | Na₄Fe_{2.9}(PO₄)₂P₂O₇ | Fe | 5.0 | 10.0 | 3.0 | 2.50 | 2 |
| Example 13 | Na₄Fe₃(PO₄)₂P₂O₇ | Fe | 5.0 | 3.0 | 3.0 | 2.00 | 2 |
| Example 14 | Na_{3.98}Fe₃(PO₄)₂P₂O₇ | Fe | 5.0 | 3.0 | 3.0 | 2.50 | 2 |
| Example 15 | Na₄Fe_{2.8}(PO₄)₂P₂O₇ | Fe | 5.0 | 3.0 | 3.0 | 2.50 | 2 |
| Example 16 | Na₄Fe_{2.8}(PO₄)₂P₂O₇ | Co | 4.0 | 1.0 | 3.0 | 2.50 | 2 |
| Example 17 | Na₄Fe_{2.8}(PO₄)₂P₂O₇ | Mn | 4.0 | 1.0 | 3.0 | 2.50 | 2 |
| Example 18 | Na₄Fe_{2.8}(PO₄)₂P₂O₇ | Mn | 4.0 | 1.0 | 1.5 | 2.00 | 2 |
| Example 19 | Na_{4.1}Fe₃(PO₄)₂P₂O₇ | Fe | 5.0 | 3.0 | 3.0 | 2.50 | 2 |
| Example 20 | Na_{4.1}Fe₃(PO₄)₂P₂O₇, | Fe | 6.0 | 3.0 | 3.0 | 2.50 | 2 |
| Example 21 | Na_{4.1}Fe₃(PO₄)₂P₂O₇ | Co | 6.0 | 3.0 | 3.0 | 2.50 | 2 |
| Example 22 | Na_{3.98}Fe_{2.9}(PO₄)₂P₂O₇ | Fe | 5.0 | 3.0 | 3.0 | 2.50 | 2 |
| Example 23 | Na_{3.98}Fe_{2.9}(PO₄)₂P₂O₇ | Fe | 6.0 | 3.0 | 3.0 | 2.50 | 2 |
| Example 24 | Na₃V₂(PO₄)₃ | Fe | 5.0 | 3.0 | 3.0 | 2.50 | 2 |
| Comparative example 1 | Na₄Fe_{2.9}(PO₄)₂P₂O₇ | / | / | 3.0 | 3.0 | 2.50 | 2 |
| Comparative example 2 | Na₄Fe₃(PO₄)₂P₂O₇ | / | / | 3.0 | 3.0 | 2.50 | 2 |
| Comparative example 3 | Na_{3.98}Fe₃(PO₄)₂P₂O₇ | / | / | 3.0 | 3.0 | 2.50 | 2 |
| Comparative example 4 | Na₄Fe_{2.8}(PO₄)₂P₂O₇ | / | / | 3.0 | 3.0 | 2.50 | 2 |
| Comparative example 5 | Na_{4.1}Fe₃(PO₄)₂P₂O₇ | / | / | 3.0 | 3.0 | 2.50 | 2 |
| Comparative example 6 | Na_{3.98}Fe_{2.9}(PO₄)₂P₂O₇ | / | / | 3.0 | 3.0 | 2.50 | 2 |

**Table 2**

| No. | Positive electrode active composite material | | Positive electrode plate | | Battery | | |
|---|---|---|---|---|---|---|---|
| | I_{D}/I_{G} | Powder resistance /Ω•cm | Compaction density of film layer /(g/cm³) | Electrode sheet resistance /Ω•cm | First-cycle discharge capacity /mAh•g⁻¹ | First-cycle coulombic efficiency | Capacity retention rate after 100 cycles |
| Example 1 | 0.57 | 250 | 2.1 | 0.3 | 118.6 | 99.60% | 98.80% |
| Example 2 | 0.61 | 489 | 2.1 | 0.3 | 118.3 | 99.40% | 98.60% |
| Example 3 | 0.67 | 690 | 2.1 | 0.4 | 118.1 | 99.30% | 98.50% |
| Example 4 | 0.68 | 870 | 2.1 | 0.5 | 117.9 | 99.20% | 98.40% |
| Example 5 | 0.48 | 60 | 2.15 | 0.1 | 119.2 | 99.80% | 99.50% |
| Example 6 | 0.57 | 255 | 2.1 | 0.3 | 118.9 | 99.70% | 98.70% |
| Example 7 | 0.68 | 1080 | 2 | 0.6 | 117.6 | 99.60% | 99.20% |
| Example 8 | 0.65 | 3120 | 2.05 | 0.8 | 117.8 | 98.90% | 97.80% |
| Example 9 | 0.51 | 75 | 2.2 | 0.1 | 119.1 | 99.80% | 99.60% |
| Example 10 | 0.61 | 86820 | 2.1 | 1.2 | 115.9 | 97.20% | 96.30% |
| Example 11 | 0.7 | 10350 | 2.2 | 1.1 | 116.8 | 98.60% | 98.80% |
| Example 12 | 0.56 | 80 | 1.9 | 0.15 | 110.1 | 99.80% | 99.50% |
| Example 13 | 0.61 | 320 | 2.1 | 0.1 | 113.8 | 99.60% | 99.00% |
| Example 14 | 0.6 | 310 | 2.1 | 0.3 | 115.5 | 98.80% | 97.50% |
| Example 15 | 0.59 | 315 | 2.1 | 0.35 | 118.6 | 98.70% | 98.20% |
| Example 16 | 0.68 | 3080 | 2.1 | 0.55 | 118.2 | 99.30% | 98.30% |
| Example 17 | 0.69 | 2230 | 2.1 | 0.5 | 118.3 | 99.40% | 98.50% |
| Example 18 | 0.69 | 2245 | 2.1 | 0.4 | 118.6 | 99.60% | 98.60% |
| Example 19 | 0.59 | 1820 | 2.1 | 0.5 | 116.5 | 98.90% | 98.60% |
| Example 20 | 0.55 | 670 | 2.1 | 0.45 | 116.7 | 99.00% | 98.80% |
| Example 21 | 0.66 | 730 | 2.1 | 0.48 | 116.6 | 98.90% | 98.80% |
| Example 22 | 0.55 | 475 | 2.1 | 0.3 | 117.6 | 99.60% | 98.80% |
| Example 23 | 0.54 | 460 | 2.1 | 0.3 | 117.8 | 99.70% | 98.80% |
| Example 24 | 0.52 | 150 | 1.7 | 0.3 | 113.6 | 99.80% | 98.20% |
| Comparative example 1 | 0.71 | 4600 | 2 | 0.86 | 117.8 | 99.00% | 98.00% |
| Comparative example 2 | 0.78 | 5497 | 2 | 1 | 115.6 | 99.60% | 98.80% |
| Comparative example 3 | 0.72 | 5113 | 2 | 0.95 | 115.1 | 98.60% | 97.30% |
| Comparative example 4 | 0.7 | 4805 | 2 | 0.9 | 117.8 | 98.90% | 97.80% |
| Comparative example 5 | 0.82 | 5824 | 2 | 1.2 | 116.5 | 98.60% | 98.00% |
| Comparative example 6 | 0.73 | 3813 | 2 | 0.8 | 117.2 | 99.20% | 98.80% |

According to the above results, it can be seen that the positive electrode active composite materials in Examples 1 to 24 include: a carbon material, a transition metal M, and a polyanionic compound, where the polyanionic compound has a general formula of NaxRy (PO4)2P2O7, in which R includes at least one of Mg, Al, Sc, Ti, V, Cr, Mn, Fe, Co, Ni, Cu, Zn, Zr, Nb, Mo, Sn, Hf, Ta, W, and Pb, 1 ≤ x ≤ 5, and 1 ≤ y ≤ 4.

From the comparison of Examples 1 to 5 with Comparative Example 1, Example 13 with Comparative Example 2, Example 14 with Comparative Example 3, Example 15 with Comparative Example 4, Examples 19 to 21 with Comparative Example 5, and Examples 22 to 23 with Comparative Example 6, it can be seen that the positive electrode active composite materials all contain a transition metal M, and the transition metal M can catalyze the graphitization of the carbon material, thereby increasing the degree of graphitization of the carbon material, reducing the powder resistance of the positive electrode active composite material and the corresponding electrode plate resistance, increasing the compaction density of the electrode plate, and optimizing the electrochemical performance of the battery.

It can be seen from Examples 1 to 9 that based on the total molar amount of the carbon material, when the molar content of the transition metal M is 2% to 10%, the powder resistance of the positive electrode active composite material is further decreased, and the first-cycle coulombic efficiency and cycling efficiency of the battery are further improved.

It can be seen from Examples 1 to 9 that when the content in percentage by weight of the carbon material in the positive electrode active composite material is 1% to 10%, the cycling performance of the battery is further improved. When the content in percentage by weight of the carbon material in the positive electrode active composite material is 1% to 3%, the cycling performance and capacity of the battery are comprehensively optimized.

From the comparison of Examples 1 to 5, 19, and 22 with Examples 13 to 14, it can be seen that the sodium-rich or iron-poor polyanionic compound can further improve the capacity of the battery.

It should be noted that this application is not limited to the embodiments above. The above-described embodiments are merely exemplary, and embodiments having substantially the same technical idea and the same effects within the scope of the technical solution of this application are all included in the technical scope of this application. In addition, other embodiments constructed by applying various modifications conceivable to those skilled in the art to the embodiments and combining some of the constituent elements of the embodiments without departing from the scope of the essence of this application are also included in the scope of this application.

## Claims

1. A positive electrode active composite material, comprising a carbon material, a transition metal M, and a polyanionic compound.

2. The positive electrode active composite material according to claim 1, wherein the transition metal M comprises at least one of Pt, Pd, Fe, Co, Ni, Mn, Cu, Au, Ag, Ru, and Rh.

3. The positive electrode active composite material according to claim 1 or 2, wherein based on a total weight of the carbon material, a content in percentage by weight of the transition metal M is 0.1% to 10% and optionally 1% to 10%.

4. The positive electrode active composite material according to any one of claims 1 to 3, wherein based on the total weight of the positive electrode active composite material, the content in percentage by weight of the carbon material in the positive electrode active composite material is 0.1% to 10% and preferably 1% to 10%.

5. The positive electrode active composite material according to any one of claims 1 to 4, wherein the carbon material is coated on a surface of the polyanionic compound in a form of a carbon film, and the transition metal M is distributed in the carbon film.

6. The positive electrode active composite material according to any one of claims 1 to 5, wherein the carbon material is coated on surfaces of primary particles of the polyanionic compound in the form of the carbon film, and the transition metal M is distributed in the carbon film.

7. The positive electrode active composite material according to any one of claims 1 to 6, wherein a chemical bond exists between the transition metal M and the carbon material.

8. The positive electrode active composite material according to any one of claims 1 to 7, wherein the polyanionic compound comprises a sodium ion-containing phosphate framework compound or a sodium ion-containing sulfate framework compound.

9. The positive electrode active composite material according to any one of claims 1 to 8, wherein the polyanionic compound comprises a phosphate-based sodium salt material and a sulfate-based sodium salt material; and the phosphate-based sodium salt material comprises a compound represented by any one of Formulas I to IV, and the phosphate-based sodium salt material comprises a compound represented by Formula V:
Naₓ₁R_{y1}(PO₄)_{z1} Formula I
where 1 ≤ x1 ≤ 3, 1 ≤ y1 ≤ 2, 1 ≤ z1 ≤ 3, and R comprises at least one of Mg, Al, Sc, Ti, V, Cr, Mn, Fe, Co, Ni, Cu, Zn, Zr, Nb, Mo, Sn, Hf, Ta, W, and Pb;
Naₓ₂R_{y2}(P₂O₇)_{z2} Formula II
where 1 ≤ x2 ≤ 7, 1 ≤ y2 ≤ 3, 1 ≤ z2 ≤ 4, and R comprises at least one of Mg, Al, Sc, Ti, V, Cr, Mn, Fe, Co, Ni, Cu, Zn, Zr, Nb, Mo, Sn, Hf, Ta, W, and Pb;
Naₓ₃R_{y3}(PO₄)_{z3}(P₂O₇)ₖ₃ Formula III
where 1 ≤ x3 ≤ 7, 1 ≤ y3 ≤ 4, 1 ≤ z3 ≤ 2, and 1 ≤ k3 ≤ 4, and R comprises at least one of Mg, Al, Sc, Ti, V, Cr, Mn, Fe, Co, Ni, Cu, Zn, Zr, Nb, Mo, Sn, Hf, Ta, W, and Pb;
Naₓ₄R_{y4}(PO₄)_{z4}Mₗ₁ Formula IV
where 1 ≤ x4 ≤ 3, 1 ≤ y4 ≤ 2, 1 ≤ z4 ≤ 2, 1 ≤ l1 ≤ 3, R comprises at least one of Mg, Al, Sc, Ti, V, Cr, Mn, Fe, Co, Ni, Cu, Zn, Zr, Nb, Mo, Sn, Hf, Ta, W, and Pb, and M comprises at least one of F, Cl, and Br; and
Naₓ₅X_{y5}(SO₄)₃ Formula V
where 0 < x5 ≤ 2, 0 < y5 ≤ 2, and X comprises at least one of Mn, Fe, Co, Ni, Cu, and Zn.

10. The positive electrode active composite material according to any one of claims 1 to 9, wherein an I_{D}I_{G} value of the carbon material in the positive electrode active composite material is less than 0.8, and the I_{D}I_{G} value is a ratio of a peak intensity I_{D} in a range of 1300 cm⁻¹ to 1400 cm⁻¹ to a peak intensity I_{G} in a range of 1580 cm⁻¹ to 1620 cm⁻¹ determined by Raman spectroscopy.

11. The positive electrode active composite material according to any one of claims 1 to 10, wherein a median particle size Dᵥ50 of the positive electrode active composite material satisfies 0.5 µm ≤ Dᵥ50 ≤ 10 µm and optionally 1.0 µm ≤ Dᵥ50 ≤ 5.0 µm.

12. The positive electrode active composite material according to any one of claims 1 to 11, wherein a powder resistance of the positive electrode active composite material at 25°C under a pressure of 200 MPa is 50 Ω · cm to 3500 Ω · cm.

13. A method for preparing a positive electrode active composite material, comprising the following steps:
preparing a polyanionic compound precursor; and
mixing the precursor, a carbon source, and an M source uniformly, and performing high-temperature calcination to prepare the positive electrode active composite material, wherein the M source comprises a transition metal salt; and
the positive electrode active composite material comprises a carbon material, a transition metal M and a polyanionic compound.

14. The preparation method according to claim 13, wherein the polyanionic compound comprises a compound represented by any one of Formulas I to III:
Naₓ₁R_{y1}(PO₄)_{z1} Formula I
where 1 ≤ x1 ≤ 3, 1 ≤ y1 ≤ 2, 1 ≤ z1 ≤ 3, and R comprises at least one of Mg, Al, Sc, Ti, V, Cr, Mn, Fe, Co, Ni, Cu, Zn, Zr, Nb, Mo, Sn, Hf, Ta, W, and Pb;
Naₓ₂R_{y2}(P₂O₇)_{z2} Formula II
where 1 ≤ x2 ≤ 7, 1 ≤ y2 ≤ 3, 1 ≤ z2 ≤ 4, and R comprises at least one of Mg, Al, Sc, Ti, V, Cr, Mn, Fe, Co, Ni, Cu, Zn, Zr, Nb, Mo, Sn, Hf, Ta, W, and Pb; and
Naₓ₃R_{y3}(PO₄)_{z3}(P₂O₇)ₖ₃ Formula III
where 1 ≤ x3 ≤ 7, 1 ≤ y3 ≤ 4, 1 ≤ z3 ≤ 2, and 1 ≤ k3 ≤ 4, and R comprises at least one of Mg, Al, Sc, Ti, V, Cr, Mn, Fe, Co, Ni, Cu, Zn, Zr, Nb, Mo, Sn, Hf, Ta, W, and Pb; and
the polyanionic compound precursor is prepared through a process comprising the following steps:
mixing raw materials comprising a phosphorus source, a sodium source, and an R source with a solvent to obtain a primary mixed slurry, and drying the primary mixed slurry followed by low-temperature calcination to obtain the polyanionic compound precursor.

15. The preparation method according to claim 14, wherein the primary mixed slurry further comprises the carbon source.

16. The preparation method according to claim 14 or 15, wherein the low-temperature calcination is carried out at a calcination temperature of 300°C to 350°C for a calcination time of 1 h to 6 h.

17. The preparation method according to any one of claims 13 to 16, wherein the high-temperature calcination is carried out at a calcination temperature of 450°C to 700°C for a calcination time of 5 h to 15 h.

18. The preparation method according to any one of claims 13 to 17, wherein the carbon source comprises one or more of sucrose, glucose, citric acid, starch, cyclodextrin, asphalt, polypropylene, polyethylene, polyethylene glycol, and polystyrene.

19. The preparation method according to any one of claims 13 to 18, wherein the R source comprises one or more of a magnesium source, an aluminum source, a scandium source, a titanium source, a vanadium source, a chromium source, a manganese source, an iron source, a cobalt source, a nickel source, a copper source, a zinc source, a zirconium source, a niobium source, a molybdenum source, a tin source, a hafnium source, a tantalum source, a tungsten source, and a lead source.

20. The preparation method according to any one of claims 13 to 19, wherein the M source comprises one or more of a platinum source, a palladium source, an iron source, a cobalt source, a nickel source, and a manganese source.

21. A positive electrode plate, comprising a positive electrode film layer, the positive electrode film layer comprising a binder, a conductive agent, and the positive electrode active composite material according to any one of claims 1 to 12 or a positive electrode active composite material prepared through the preparation method according to any one of claims 13 to 20.

22. The positive electrode plate according to claim 21, wherein based on a total weight of the positive electrode film layer, a content in percentage by weight of the binder is 1.5% to 3% and optionally 2.0% to 2.5%.

23. The positive electrode plate according to claim 21 or 22, wherein the conductive agent comprises at least one of a one-dimensional conductive material and a zero-dimensional conductive material.

24. The positive electrode plate according to claim 23, wherein the one-dimensional conductive material comprises one or more of a single-walled carbon nanotube and a multi-walled carbon nanotube; and/or
based on the total weight of the positive electrode film layer, the content in percentage by weight of the one-dimensional conductive material is 0.2% to 1% and optionally 0.5% to 1%.

25. The positive electrode plate according to claim 23 or 24, wherein the zero-dimensional conductive material comprises one or more of Super P, Ketjen black, and acetylene black, and/or
based on the total weight of the positive electrode film layer, a content in percentage by weight of the zero-dimensional conductive material is 1% to 3% and optionally 2% to 2.8%.

26. A secondary battery, comprising a positive electrode plate according to any one of claims 21 to 25.

27. The secondary battery according to claim 26, wherein the secondary battery is a negative electrode sodium-free secondary battery.

28. The secondary battery according to claim 26 or 27, wherein the secondary battery further comprises a negative electrode plate, the negative electrode plate comprises a negative electrode current collector and a base coating layer provided on at least one surface of the negative electrode current collector, and the base coating layer comprises one or more of carbon nanotubes, graphite, graphene, silver/carbon composite nanoparticles, and tin/carbon composite nanoparticles.

29. The secondary battery according to claim 28, wherein the base coating layer has an areal density of 5 g/m² to 50 g/m².

30. The secondary battery according to claim 28 or 29, wherein the base coating layer has a thickness of 2 µm to 100 µm.

31. A power consuming apparatus, comprising a secondary battery according to any one of claims 26 to 30.
